# EUROPEAN PATENT SPECIFICATION

(11) **EP 4 086 879 B1**
(45) Date of publication and mention of the grant of the patent: **02.12.2026**
(21) Application number: 21750616.1
(22) Date of filing: 12.01.2021
(51) Int. Cl.: G09B 23/28, G09B 23/30, G09B 23/34

(54) **PROCEDURE SIMULATOR, AND PROCEDURE PRACTICE METHOD USING SAME**
VORGANGSSIMULATOR UND VERFAHREN ZUR DURCHFÜHRUNG DES VORGANGS UNTER VERWENDUNG DESSELBEN
SIMULATEUR DE PROCÉDURE ET PROCÉDÉ DE PRATIQUE DE PROCÉDURE L'UTILISANT

(30) Priority: 04.02.2020 JP 2020017102
(43) Date of publication of application: 09.11.2022
(73) Proprietor: TERUMO Kabushiki Kaisha, Tokyo 151-0072 (JP)
(72) Inventor: OZAKI, Kouji, Ashigarakami-gun, Kanagawa 259-0151 (JP); NOZAWA, Daiki, Tokyo 163-1450 (JP); FUKAMIZU, Junichi, Tokyo 163-1450 (JP); TAKAHASHI, Makoto, Ashigarakami-gun, Kanagawa 259-0151 (JP)
(74) Representative: Prüfer & Partner mbB Patentanwälte · Rechtsanwälte
(86) International application number: PCT/JP2021/000614
(87) International publication number: WO 2021/157285

(56) References cited:
- WO-A1-2016/075732
- WO-A1-2019/005868
- WO-A1-2020/031474
- JP-A- 2016 057 451
- JP-A- 2017 140 334
- US-A1- 2009 226 867
- US-A1- 2015 161 347
- US-B1- 9 852 660
- JORGE ARAMBURU ET AL: "Numerical zero-dimensional hepatic artery hemodynamics model for balloon-occluded transarterial chemoembolization", INTERNATIONAL JOURNAL FOR NUMERICAL METHODS IN BIOMEDICAL ENGINEERING, JOHN WILEY & SONS, INC, HOBOKEN, USA, vol. 34, no. 7, 16 April 2018 (2018-04-16), pages n/a, XP072452457, ISSN: 2040-7939, DOI: 10.1002/CNM.2983
- ARAMBURU JORGE ET AL: "In Vitro Model for Simulating Drug Delivery during Balloon-Occluded Transarterial Chemoembolization", BIOLOGY, vol. 10, no. 12, 16 December 2021 (2021-12-16), pages 1341, XP093046891, DOI: 10.3390/biology10121341

## Description

### Technical Field

This disclosure relates to a procedure simulator that is used for training of a procedure using a catheter, and a procedure training method using the same.

### Background Art

Procedures in which a diagnostic agent such as a contrast medium or a therapeutic agent such as an anticancer agent or an embolization material is administered through a catheter inserted into an artery to conduct a diagnosis and treatment, with respect to liver cancer, prostate tumor, uterine fibroid, and the like have been known. In the treatment, it is desirable to selectively administer the therapeutic agent to a tissue of the cancer, the tumor, or the like, and prevent the therapeutic agent from flowing into a normal tissue as much as possible.

In recent years, a procedure such as balloon occluded trans arterial chemo embolization (B-TACE) in which attention is focused on the concentration of arterial flows because minute artery blood vessels are formed in the cancer tissue is reported below.

US Patent No. 9844383

Irie et al., "Dense Accumulation of Lipiodol Emulsion in Hepatocellular Carcinoma Nodule during Selective Balloon-occluded Arterial Stump Pressure", Cardio Vascular and Intervention Radiology, 2013, No. 36, p. 706-713

Matsumoto et al., "Balloon-occluded arterial stump pressure before balloon-occluded transarterial chemoembolization", Minimally Invasive Therapy & Allied Technologies, Volume 25, 2016 Issue 1, September 25, 2015, the Internet <URL:https://doi.org/10.3109/13645706.2015.1086381> Aramburu et al., "Numerical zero-dimensional hepatic artery hemodynamics model for balloon-occluded transarterial chemoembolization", International Journal for Numerical Methods in Biomedical Engineering, 2018, vol. 34, no. 7, p. 1-21, refers to numerical zero-dimensional simulations that permit an approach for exploring the blood-flow redistribution caused by the occlusion of a main artery. US 2009/226867 refers to a cardiovascular flow system which includes a cardiovascular model system, a pump system in fluid connection with the cardiovascular model system, and an ECG simulator in communicative connection with the pump system.

B-TACE is a percutaneous treatment procedure in which an artery upstream of a cancer tissue where arterial flows are concentrated is occluded with a balloon of a catheter distal end portion, whereby a local difference (also called pressure difference) in blood pressure between a normal tissue and the tissue of a cancer, a tumor, or the like is be generated. B-TACE is characterized in that a therapeutic agent is administered from a distal end side of the balloon inserted into the blood vessel and caused to inflate, whereby the therapeutic agent is specifically concentrated to a treatment site.

### Summary of Invention

However, it is difficult for a doctor who is familiar with the conventional treatment to intuitively understand the blood flow that is generated locally in the living body and under a limited condition, and the fact is that it is difficult to say that these procedures are widely used in medical practice.

Therefore, there is a demand for a procedure simulator and a procedure training method using the same with which it is possible to actually realize that a therapeutic agent can be selectively administered to a specific region due to a pressure difference that is generated by occluding an inside of a blood vessel with a balloon.

One aspect of the disclosure below is a procedure simulator including: a first storage tank that stores therein a liquid; a tissue model including a plurality of bifurcated flow paths being bifurcated downstream via a plurality of bifurcated portions, the bifurcated portions and the bifurcated flow paths being formed at a same height; a pump that supplies the liquid in the first storage tank to the tissue model; a second storage tank that stores therein the liquid to be flowed out from the bifurcated flow paths; a pipe that connects an outlet of the bifurcated flow path to the second storage tank; a switching valve that is provided on a way of the pipe, and selectively causes the bifurcated flow path to communicate with a drain flow path from which the liquid is discharged below the second storage tank; a filter member that is provided on a way of the pipe between the switching valve and the outlet of the bifurcated flow path, and wherein the filter members that are provided to the respective bifurcated flow paths are disposed side by side in a line.

Also described herein is a procedure training method that uses the procedure simulator of the one aspect, and the procedure training method includes: a step of filling the liquid in the first storage tank; a step of driving the pump to cause the liquid to circulate among the first storage tank, the tissue model, and the second storage tank; a step of discharging the liquid from the drain flow path via the switching valve of the pipe coupled to the outlet of the predetermined bifurcated flow path; a step of inserting a catheter into the tissue model, and occluding an upstream portion of the bifurcated flow path that communicates with the drain flow path, with the balloon; and a step of causing a contrast medium or a therapeutic agent to flow from a distal end of the balloon.

With the procedure simulator of the present invention and the procedure training method described herein, which uses the same in the abovementioned aspects, it is possible to generate a pressure difference between the bifurcated flow paths by providing switching valves and filter members in the downstream parts on the bifurcated flow paths, and to cause a user to actually realize that the therapeutic agent can be selectively administered to a specific region with the filter member.

### Brief Description of Drawings

[FIG. 1] FIG. 1 is a schematic view of a liver.
[FIG. 2] FIG. 2 is a plan view of a procedure simulator according to a first embodiment.
[FIG. 3] FIG. 3 is a perspective view of the procedure simulator of FIG. 2 in a state where pipes and a catheter introduction member are removed.
[FIG. 4] FIG. 4 is a cross-sectional view of a tissue model of the procedure simulator of FIG. 2.
[FIG. 5] FIG. 5 is a schematic view illustrating a circulation route of a liquid in the procedure simulator of FIG. 2.
[FIG. 6] FIG. 6 is a plan view of a catheter that is used for the procedure simulator of FIG. 2.
[FIG. 7] FIG. 7 is an explanation view illustrating a flow of the liquid when a drain flow path is communicated with a predetermined bifurcated flow path in the procedure simulator of FIG. 2.
[FIG. 8] FIG. 8 is an explanation view illustrating the flow of the liquid when an upstream side of the bifurcated flow path is occluded with a balloon, in the operation of the procedure simulator of FIG. 7.
[FIG. 9] FIG. 9 is a perspective view of a procedure simulator according to a second embodiment.

### Description of Embodiments

The following describes preferred embodiments of the present invention in details with reference to the accompanying drawings.

### (First Embodiment)

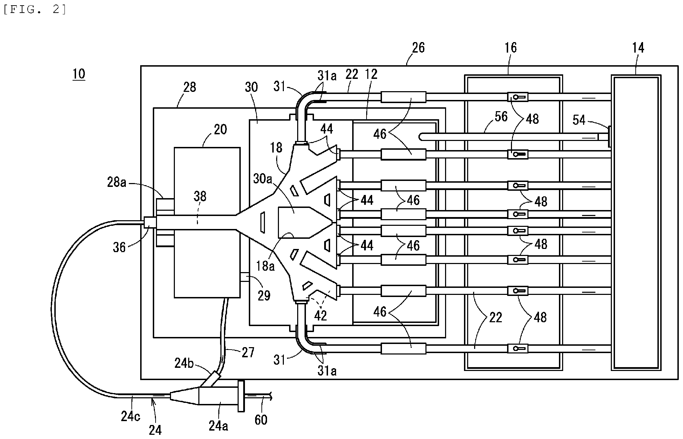

The present embodiment describes a procedure simulator 10 (see FIG. 2) that simulates treatment for liver cancer.

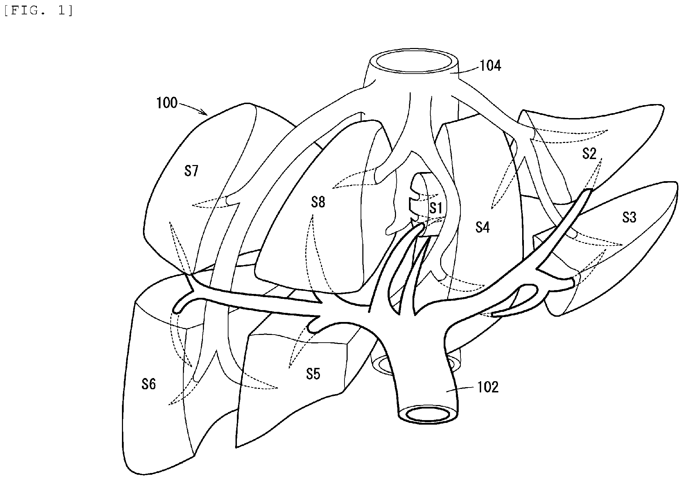

A liver 100 is the largest organ in an abdominal region of a human being, and ducts such as a hepatic artery 102, a hepatic vein 104, a bile duct, and a portal vein are led thereto, as illustrated in FIG. 1. Note that, in FIG. 1, illustrations of the bile duct and the portal vein are omitted. According to the anatomical classification by Claude Couinaud, the liver 100 is classified into eight subsegments of S1 to S8. In the drawing, S1 is caudate lobe, S2 is a left lateral posterior segment, S3 is a left lateral anterior segment, S4 is a left medial segment, S5 is a right anterior inferior segment, S6 is a right posterior inferior segment, S7 is a right posterior superior segment, and S8 is a right anterior superior segment. Each subsegment is functionally independent, and includes a duct into and out of which blood or the like flows. Accordingly, in the specification and the treatment of a lesion area, it is important to classify the liver into eight subsegments.

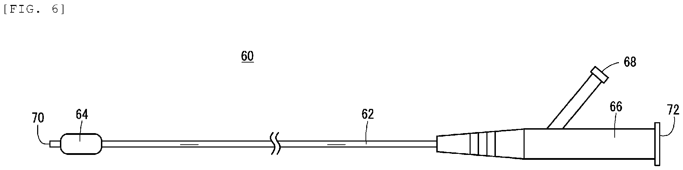

In treatment for liver cancer, a procedure in which a catheter 60 (see FIG. 6) is inserted from the hepatic artery 102, and a therapeutic agent is administered selectively to a subsegment in which a cancer tissue is formed, is performed. In the cancer tissue, a large number of minute artery blood vessels are formed. Therefore, in the subsegment where the cancer tissue is present, the blood in the hepatic artery 102 becomes easy to locally flow, thereby generating a local difference (pressure difference) in blood pressure with the hepatic artery 102 in a normal subsegment where no cancer tissue is present. Here, when a predetermined site of the hepatic artery 102 is occluded with a balloon 64 in a distal end portion of the catheter 60, the blood selectively flows toward the cancer tissue due to the pressure difference. By using the flow of the blood, it is possible to perform a procedure of selectively administering a therapeutic agent to a segment where the cancer tissue is present.

As illustrated in FIG. 2, the procedure simulator 10 according to the embodiment simulates the abovementioned artery of the liver 100, and includes a tissue model 18 including eight bifurcated flow paths 42 being bifurcated so as to correspond to the eight subsegments. The bifurcated flow paths 42 in the procedure simulator 10 respectively simulate arteries that are connected to the respective subsegments (S1 to S8) in the liver 100, and are used in the training of the cancer treatment using the catheter 60.

The procedure simulator 10 includes a first storage tank 12, a second storage tank 14, a third storage tank 16, the tissue model 18, a pump 20, pipes 22, and a catheter introduction member 24, as illustrated. Among them, the first storage tank 12, the second storage tank 14, the third storage tank 16, the tissue model 18, the pump 20, and the pipes 22 are disposed onto a flat support plate 26. At least each of the first storage tank 12, the second storage tank 14, the third storage tank 16, the tissue model 18, and the pump 20 can be attached onto the support plate 26, which makes it easy to be carried and set.

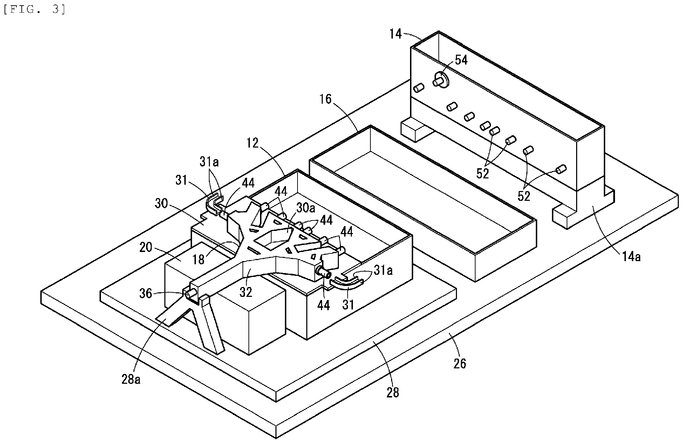

As illustrated in FIG. 3, a tray 28 is mounted on the support plate 26. The tray 28 is a plate-like member for collectively supporting the first storage tank 12, the tissue model 18, and the pump 20, and includes one end to which the first storage tank 12 is disposed. The tray 28 includes the other end to which a support 28a that supports an upstream portion (a starting end portion 36) of the tissue model 18 is provided. Moreover, the pump 20 is disposed between the support 28a and the first storage tank 12 on the tray 28. The first storage tank 12 is attachable and detachable to and from the tray 28.

The first storage tank 12 is a container in which a liquid to be introduced into the tissue model 18 is stored, and is formed in a rectangular shape in a plan view. The first storage tank 12 is disposed under the tissue model 18. The first storage tank 12 is formed of a resin material such as acrylic resin. The first storage tank 12 may include an opening portion in an upper end thereof.

The pump 20 includes, for example, a centrifugal pump, and pumps up a liquid stored in the first storage tank 12 to the tissue model 18 that is provided above the first storage tank 12. As illustrated in FIG. 2, a suction port of the pump 20 is coupled to the first storage tank 12 via a suction flow path 29. One end of a discharge pipe 27 is coupled to a discharge port of the pump 20. The other end of the discharge pipe 27 is coupled to a liquid supply inlet 24b bifurcated from an introduction port 24a of the catheter introduction member 24.

The catheter introduction member 24 is provided with a flexible tubular main body portion 24c, and the introduction port 24a provided at a proximal side of the main body portion 24c. A distal side of the main body portion 24c is coupled to the starting end portion 36 of the tissue model 18, and the introduction port 24a and the liquid supply inlet 24b communicate with a flow path 38 of the tissue model 18 through the main body portion 24c. A liquid discharged from the pump 20 is sent into the starting end portion 36 of the tissue model 18 through the catheter introduction member 24.

The introduction port 24a simulates an insertion port from which the catheter 60 is inserted into a blood vessel. The introduction port 24a is provided with a valve, which is not illustrated, that allows the catheter 60 to be inserted and prevents the liquid in an inside of the catheter introduction member 24 from leaking.

As illustrated in FIG. 3, the tissue model 18 is disposed above the first storage tank 12. The tissue model 18 is attached onto a plate-like support member 30. The support member 30 is a flat plate-like member that is bridged over so as to cover a part of an upper end opening portion of the first storage tank 12, and is provided with a projection portion 30a to be inserted into an engagement hole 18a of the tissue model 18, on a top face side thereof. Pipe guides 31 that guide bent parts of the pipes 22 are respectively provided on both side portions of the support member 30. The pipe guide 31 is a U-character shaped groove that can hold the pipe 22 in an inside thereof. The pipe guide 31 includes a pair of side wall portions 31a curved in a circular arc shape in a plan view, and holds the pipe 22 in a state of being curved along the pipe guide 31, between the pair of these side wall portions 31a, thereby preventing the pipe 22 from being occluded. The tissue model 18 includes the engagement hole 18a that is fitted into the projection portion 30a, and is fixed onto the support member 30 in a simplified manner via the pipes 22 held by the pipe guides 31.

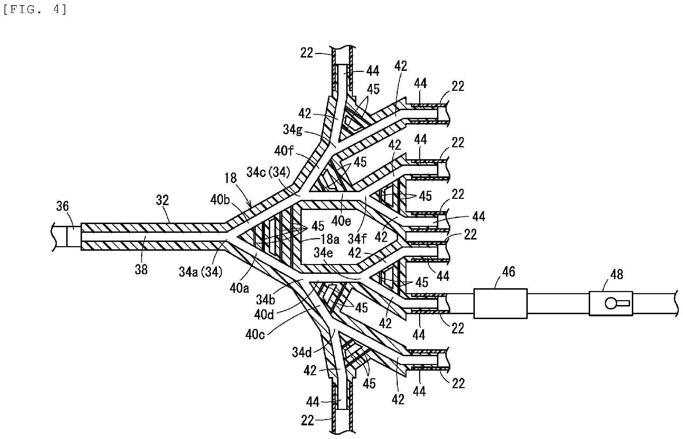

As illustrated in FIG. 4, the tissue model 18 is provided to a flow path formation block 32 that is made of a transparent material such as acrylic resin. Note that, the tissue model 18 may include a soft material (rubber material) such as silicon resin. The flow path formation block 32 configures the tissue model 18 and includes a plurality of bifurcated portions 34, as illustrated, and eight bifurcated flow paths 42 being bifurcated from the starting end portion 36 at the upstream side toward the downstream side in a shape of a tree diagram. A bifurcated portion 34a is formed in the closest portion to the starting end portion 36, and the flow path 38 is bifurcated into two bifurcated flow paths 40a and 40b in the bifurcated portion 34a. The bifurcated flow paths 40a and 40b being bifurcated at left-right symmetrical angles with respect to the flow path 38 at the upstream side of the bifurcated portion 34a are formed to each have an equal length.

Bifurcated portions 34b and 34c are respectively formed to terminals (ends at the downstream side) of the bifurcated flow paths 40a and 40b. In the bifurcated portion 34b, the bifurcated flow path 40a is bifurcated into two bifurcated flow paths 40c and 40d. The bifurcated flow path 40a is bifurcated into the bifurcated flow paths 40c and 40d at left-right symmetrical angles with respect to a traveling direction thereof at the upstream side. In the bifurcated portion 34c, the bifurcated flow path 40b is bifurcated into two bifurcated flow paths 40e and 40f. The bifurcated flow path 40b is bifurcated into the bifurcated flow paths 40e and 40f at left-right symmetrical angles with respect to the traveling direction thereof at the upstream side. The bifurcated flow paths 40c to 40f are formed so as to each have an approximately equal length.

Bifurcated portions 34d to 34g are respectively formed to terminals of the bifurcated flow paths 40c to 40f. In each of the bifurcated portions 34d to 34g, each of the bifurcated flow paths 40c to 40f is further bifurcated into two bifurcated flow paths 42. In other words, the tissue model 18 eventually includes the eight bifurcated flow paths 42 being bifurcated. Each of the bifurcated flow paths 40c to 40f is bifurcated into bifurcated flow paths 42 in left and right directions at the equal angle with respect to each of the bifurcated flow paths 40c to 40f at the upstream side, and the eight bifurcated flow paths 42 are formed so as to each have an approximate same length.

In the tissue model 18, the flow path length from the starting end portion 36 to the terminal of each bifurcated flow path 42 is the same. Moreover, all of the bifurcated portions 34a to 34g and the bifurcated flow paths 40a to 40f and 42 are formed on the same plane. Accordingly, each bifurcated flow path 42 in the tissue model 18 can have an equivalent flow rate. The eight bifurcated flow paths 42 respectively simulate the eight arteries to be connected to the subsegments S1 to S8 in the liver 100 (see FIG. 1).

Moreover, in the tissue model 18, in the downstream of each of the bifurcated portions 34a to 34g, a plurality of interlock flow paths 45 that connect the bifurcated flow paths 40a to 40f and 42 to each other are provided. These interlock flow paths 45 imitate collateral blood flows of a tissue. The bifurcated flow paths 40a to 40f and 42 in the inside of the tissue model 18 are formed such that an inside diameter thereof becomes smaller at about 70 to 90% of the inside diameter before the bifurcation for every time each bifurcated flow path passes through each of the bifurcated portions 34a to 34g. The inside diameter after the bifurcation is preferably set to about 80% (78 to 82%) of the inside diameter before the bifurcation in order to be closer to a tube tissue of human being. For example, in a case where the inside diameter of the flow path 38 at a side of the starting end portion 36 is set to 5 mm, the inside diameter of each of the bifurcated flow paths 40a and 40b can be set to about 4 mm, and the inside diameter of each of the bifurcated flow paths 40c to 40f can be set to about 3.3 mm. Moreover, the inside diameter of the bifurcated flow path 42 can be set to about 2.8 mm. In addition, the inside diameter of the interlock flow path 45 can be set to about 1.5 to 1.8 mm.

As for such the tissue model 18, two resin plates having a thickness about half of that of the tissue model 18 are prepared, and grooves corresponding to the flow path 38, the bifurcated flow paths 40a to 40f and 42, and the interlock flow paths 45 are formed in each resin plate. Further, the two resin plates are overlapped and joined to each other such that the grooves correspond to each other, thereby forming the tissue model 18.

Connection ports 44 serving as outlets of the bifurcated flow paths 42 are respectively provided to terminals of the bifurcated flow paths 42. As illustrated in FIG. 2, one ends of the pipes 22 are respectively coupled to the connection ports 44. The eight pipes 22 corresponding to the eight bifurcated flow paths 42 are provided. The pipes 22 extend toward the second storage tank 14, and the other ends of the pipes 22 are respectively coupled to connection ports 52 of the second storage tank 14. Note that, the pipes 22 in both side portions that are largely inclined from the direction toward the second storage tank 14 are respectively guided by the pipe guides 31 and curved to the directions toward the second storage tank 14.

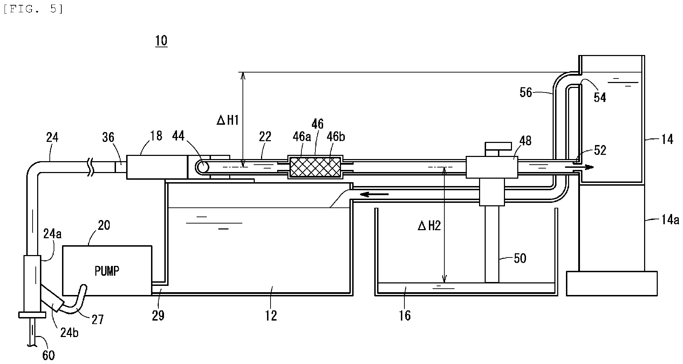

A filter member 46 and a three-way stopcock 48 are provided to each of the pipes 22. The filter member 46 is provided at the upstream side (in other words, at a side of the tissue model 18 from the three-way stopcock 48) of the three-way stopcock 48, and simulates a cancer cell. The filter members 46 are disposed side by side in a line on the first storage tank 12. As illustrated in FIG. 5, the filter member 46 is provided with a cylindrical casing 46a, and a filter 46b filled in an inside of the casing 46a. In order to allow the discoloration of the filter 46b to be visually identified, the casing 46a is formed of a raw material such as a transparent resin material with which the inside can be visually identified. The filter 46b is formed of a white or pale color material, and is colored when a coloring agent imitating a therapeutic agent or a colored embolic agent is passed therethrough. A user can check that the therapeutic agent has reached a target site by visually identify the coloration of the filter 46b. Moreover, when the embolic agent is flowed into an inside of the casing 46a of the filter member 46, the user can visually identify that the embolic agent is gradually accumulated in the inside of the filter 46b. In addition, when the occlusion of the filter 46b is progressed, the user can visually identify that the inflow velocity of the embolic agent flowing into the filter 46b is lowered. This phenomenon simulates the change in the flow of the liquid similar in a phenomenon in which an embolic agent is accumulated in cancer and tumor tissues in an actual living body. Accordingly, the user can actually check that the therapeutic agent is selectively administered to a specified site. The filter 46b is connected so as to be attachable and detachable to and from the pipe 22. In other words, the filter 46b can also be a disposable member, and in this case, only the filter 46b can be removed from the procedure simulator 10 and discarded.

A drain flow path 50 for discharging a liquid discharged from the bifurcated flow path 42 to a site lower than the tissue model 18 is coupled to the three-way stopcock 48. The three-way stopcock 48 causes the bifurcated flow path 42 to selectively communicate with the second storage tank 14 or the drain flow path 50. When the bifurcated flow path 42 is communicated with the second storage tank 14 by the three-way stopcock 48, the liquid flows into the second storage tank 14 through the pipe 22. Moreover, when the bifurcated flow path 42 is communicated with the drain flow path 50 by the three-way stopcock 48, the liquid discharged from the bifurcated flow path 42 is discharged at a position lower than the tissue model 18 through the drain flow path 50. The three-way stopcock 48 switches the flow path, thereby discharging the liquid from the drain flow path 50. The liquid discharged from the drain flow path 50 is stored in the third storage tank 16.

As illustrated in FIGS. 2 and 3, the second storage tank 14 is a storage tank formed in a rectangular shape in a plan view, and stores therein liquids discharged from the pipes 22. The volumetric capacity of the second storage tank 14 is smaller than the volumetric capacity of the first storage tank 12. As illustrated in FIG. 3, the second storage tank 14 is provided such that a position of a bottom thereof is in the vicinity of an upper end of the first storage tank 12 with a seating 14a. Note that, the second storage tank 14 is attachable and detachable to and from the support plate 26 or the seating 14a.

Moreover, the second storage tank 14 is provided with the eight connection ports 52 provided in the vicinity of a bottom portion thereof and one discharge port 54 provided in the vicinity of an upper end thereof. End portions of the pipes 22 at the downstream side are respectively coupled to the eight connection ports 52 that are provided at the same height. An end portion of a reflux pipe 56 at the upstream side is coupled to the discharge port 54.

As illustrated in FIG. 5, an end portion of the reflux pipe 56 at the downstream side is disposed in the inside of the first storage tank 12. In the second storage tank 14, the liquid is stored up to the height of the discharge port 54. When the liquid surface reaches the position of the discharge port 54, the liquid is discharged from the second storage tank 14 via the discharge port 54. The liquid discharged from the discharge port 54 flows in the reflux pipe 56 due to the drop, and flows back to the first storage tank 12.

The third storage tank 16 is a storage tank disposed between the first storage tank 12 and the second storage tank 14, and is formed in a rectangular shape in a plan view. In an inside of the third storage tank 16, a terminal of the drain flow path 50 is disposed. The third storage tank 16 stores therein the liquid discharged from the drain flow path 50. The third storage tank 16 is formed of, for example, a transparent material such as acrylic resin, and an illumination unit such as a reflection plate or planetype light-emitting equipment is disposed at a lower surface side thereof, thereby allowing irradiation of illuminating light from a side below the pipes 22 and the filter members 46. Note that, the third storage tank 16 may be fixed so as to be attachable and detachable to and from the support plate 26.

As illustrated in FIG. 6, the catheter 60 for using in the procedure simulator 10 is provided with a catheter main body 62, the balloon 64 that is provided to a distal end portion of the catheter main body 62 and can inflate and deflate, and a hub 66 that is coupled to a proximal portion of the catheter main body 62. The balloon 64 communicates with an inflation port 68 provided to the hub 66 via an inflation lumen provided to the catheter main body 62. An inflation liquid is injected from the inflation port 68, whereby the balloon 64 inflates. Note that, FIG. 6 illustrates the balloon 64 in an inflated state. Note that, the inflation liquid is injected using a syringe or the like.

The hub 66 includes an injection port 72 from which a therapeutic agent is injected into a blood vessel that extends in a segment serving as a target. The injection port 72 communicates with a terminal opening 70 of the catheter 60 via an injection lumen provided in the inside of the catheter main body 62. The therapeutic agent injected from the injection port 72 is introduced into the blood vessel from the terminal opening 70. Note that, the injection lumen also functions as a guide wire lumen.

Next, the procedure simulator 10 configured as the above acts as follows.

After a user has assembled the procedure simulator 10 as illustrated in FIG. 2, the user puts a liquid in the first storage tank 12. The liquid is preferably transparent so as to cause the user to visually recognize the change in the flow of a colored therapeutic agent or colored water due to a pressure difference, and water (tap water) that can be easily acquired and put away can be used.

Next, after the user has checked that the three-way stopcocks 48 of all the pipes 22 have communicated with the second storage tank 14, the user drives the pump 20. The pump 20 pumps up the liquid in the first storage tank 12, and supplies the liquid to the tissue model 18 through the catheter introduction member 24. The liquid flows in the flow path 38 and the bifurcated flow paths 40a to 40f and 42 of the tissue model 18, and is stored in the second storage tank 14 through the pipes 22. As illustrated in FIG. 5, the liquid in the second storage tank 14 flows back to the first storage tank 12 through the reflux pipe 56. As mentioned above, by the pump 20, the liquid in the first storage tank 12 continuously circulates in a route passing through the catheter introduction member 24, the tissue model 18, the pipes 22, the second storage tank 14, and the reflux pipe 56, and returning to the first storage tank 12.

In the second storage tank 14, the liquid surface of the liquid is kept at a position of the discharge port 54. Accordingly, a water pressure corresponding to a difference ΔH1 between the height of the tissue model 18 and the height of the liquid surface of the second storage tank 14 acts on the bifurcated flow paths 40a to 40f and 42 in the inside of the tissue model 18. In this state, the liquid flows through each bifurcated flow path 42 of the tissue model 18 at the approximately same flow rate, and can simulate flows of the healthy hepatic artery 102 having no cancer tissue.

Next, the user inserts the catheter 60 into the tissue model 18 through the catheter introduction member 24. The user can check a behavior of a simulated therapeutic agent when administering the simulated therapeutic agent from the terminal opening 70 of the catheter 60 in a state where the balloon 64 does not inflate. The user can visually identify the flow of the healthy hepatic artery 102 by injecting colored water being colored as a simulated therapeutic agent.

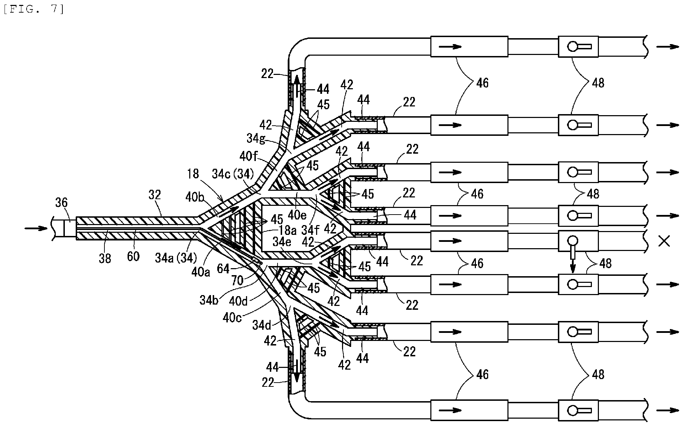

Thereafter, as illustrated in FIG. 7, the user operates the three-way stopcock 48 of the pipe 22 coupled to the predetermined bifurcated flow path 42, and causes the bifurcated flow path 42 to communicate with the drain flow path 50. Accordingly, the liquid in the predetermined bifurcated flow path 42 is discharged from a terminal portion of the drain flow path 50 that is present at a position lower than that of the tissue model 18. The water pressure of the predetermined bifurcated flow path 42 is decreased by the amount corresponding to a drop ΔH2 between the tissue model 18 and the liquid surface of the third storage tank 16. Accordingly, a pressure difference corresponding to ΔH1+ΔH2 is generated between the bifurcated flow path 42 that communicates with the second storage tank 14 and the bifurcated flow path 42 that communicates with the drain flow path 50. In this manner, the flow of the hepatic artery 102 in a case where a tumor tissue is generated in a predetermined segment can be simulated by causing the bifurcated flow path 42 to communicate with the drain flow path 50.

Next, in a state where the balloon 64 does not inflate, the user injects colored water from the terminal opening 70 of the catheter 60. In the state where the balloon 64 does not inflate, the colored water flows through all of the bifurcated flow paths 42 at the downstream side of the terminal opening 70. This is because the water pressure sent out by the pump 20 is higher than an internal pressure of the bifurcated flow path 42 that communicates with the drain flow path 50 and an internal pressure of the bifurcated flow path 42 that communicates with the second storage tank 14.

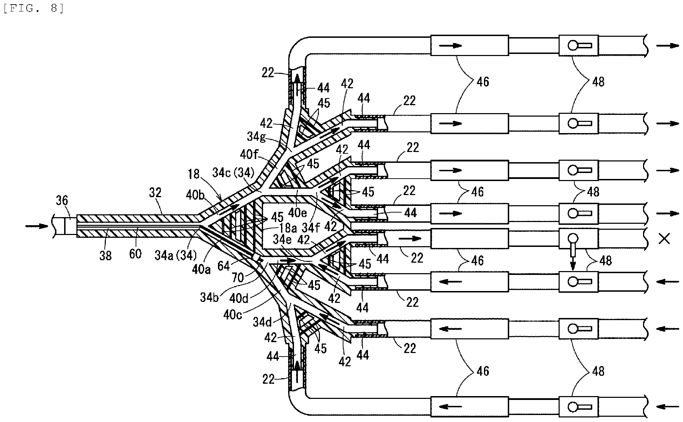

Next, as illustrated in FIG. 8, the user can visually identify the behavior of the simulated therapeutic agent in a case where the bifurcated flow path 40a and the interlock flow path 45 at the upstream side of the bifurcated portion 34b are occluded by inflating the balloon 64 of the catheter 60 at the upstream of the bifurcated portion 34b. In a state where the balloon 64 has inflated, the user injects colored water from the terminal opening 70 of the catheter main body 62. The colored water simulates a contrast medium or a therapeutic agent. Since the bifurcated flow path 40a and the interlock flow paths 45 at the upstream side are occluded with the balloon 64, the bifurcated flow paths 40a, 40c, 40d, and 42 at the downstream side of the balloon 64 receive no pressure by the pump 20.

In this case, the pressure of the bifurcated flow path 42 that communicates with the second storage tank 14 is relatively higher than the pressure of the bifurcated flow path 42 that communicates with the drain flow path 50. Accordingly, the liquid is drawn toward the bifurcated flow path 42 that communicates with the drain flow path 50 from the bifurcated flow path 42 that communicates with the second storage tank 14. In this state, when injecting the colored water from the terminal opening 70 of the catheter main body 62, the user can visually identify a state where the colored water selectively flows into the bifurcated flow path 42 communicated with the drain flow path 50. The liquid in the second storage tank 14 flows back from the bifurcated flow path 42 that communicates with the second storage tank 14, so that it is possible to generate with stability a state where the liquid flows only into the bifurcated flow path 42 that communicates with the drain flow path 50. This state is maintained for a comparatively long period of time until the liquid in the first storage tank 12 becomes empty. Therefore, the user can perform training that includes changing the occluded position of the balloon 64 to various positions, changing the position of the bifurcated flow path 42 that communicates with the drain flow path 50, and the like. Accordingly, the user can develop a better understanding of the behavior of the simulated therapeutic agent.

Moreover, the colored water flowed into the bifurcated flow path 42 that communicates with the drain flow path 50 dyes the filter member 46 when passing through the filter member 46 that simulates a cancer tissue. Accordingly, the user can visually identify that the therapeutic agent has selectively reached the cancer tissue. Moreover, the colored water may include a solid embolization material. As for the solid embolization material, gelatin, spherical plastic (bead), a fluorescent piece, and the like are suitably used. When the user has caused the solid embolization material to flow, the user can check a state where the filter member 46 becomes gradually clogged, and can grasp the change in the flow of the blood when the filter member 46 serving as a simulated tumor tissue has been clogged.

The procedure simulator 10 according to the embodiment exhibits the following effects.

In the embodiment: the first storage tank 12 that stores therein a liquid imitating blood; the tissue model 18 including the plurality of the bifurcated flow paths 40a to 40f and 42 being bifurcated toward the downstream via the plurality of the bifurcated portions 34a to 34g, the bifurcated portions 34a to 34g and the bifurcated flow paths 40a to 40f and 42 being formed at the same height; the pump 20 that supplies the liquid in the first storage tank 12 to the tissue model 18; the second storage tank 14 that stores therein the liquid to be flowed out from the bifurcated flow paths 42; the pipe 22 that connects the outlet of the bifurcated flow path 42 to the second storage tank 14; the three-way stopcock 48 (switching valve) that is provided on a way of the pipe 22 and selectively causes the bifurcated flow paths 42 to communicate with the drain flow path 50 from which the liquid is discharged below the second storage tank 14; and the filter member 46 that is provided on a way of the pipe 22 between the three-way stopcock 48 and the outlet of the bifurcated flow path 42 and includes an inside that can be visually identified, are provided.

With the abovementioned procedure simulator 10, by operating the three-way stopcock 48 (switching valve), a pressure difference can be generated between the bifurcated flow path 42 communicated with the drain flow path 50 and the bifurcated flow path 42 not communicated with the drain flow path 50, whereby a cancer tissue can be simulated by the filter member 46 provided at the downstream side of the bifurcated flow path 42. Further, by visually identifying the filter member 46, it is possible to cause the user to actually realize that the therapeutic agent can be selectively administered to a specific site.

The abovementioned procedure simulator 10 may be configured such that the pipe 22 is coupled to a vicinity of a lower end of the second storage tank 14, and the liquid surface of the liquid in the second storage tank 14 is maintained at a position higher than the tissue model 18. Accordingly, a pressure corresponding to the difference ΔH1 in height between the liquid surface of the second storage tank 14 and the tissue model 18 acts on the bifurcated flow path 42 that communicates with the second storage tank 14.

In the abovementioned procedure simulator 10, the pipe 22 may be coupled to the second storage tank 14 at the same height as the tissue model 18. With such a configuration, it is possible to make the flow resistance and the pressure that act on each bifurcated flow path 42 in the tissue model 18 uniform.

The abovementioned procedure simulator 10 may be provided with the reflux pipe 56 that is coupled to the second storage tank 14 at a position higher than the pipe 22, and causes the liquid in the second storage tank 14 to flow back to the first storage tank 12. Accordingly, it is possible to prevent the amount of the liquid in the inside of the first storage tank 12 from decreasing with time, so that the user can perform the simulation of the procedure for a longer period of time.

In the abovementioned procedure simulator 10, the filter members 46 provided to the respective bifurcated flow paths 42 are disposed side by side in a line in the downstream side of the tissue model 18. Accordingly, the user can easily visually identify a difference between the filter member 46 in which a tumor is simulated and the other filter members 46.

The abovementioned procedure simulator 10 is provided with the third storage tank 16 that contains the liquid discharged from the drain flow path 50, and the liquid surface of the third storage tank 16 can be set to a position lower than the tissue model 18. Accordingly, it is possible to generate a pressure difference corresponding to the sum of the difference ΔH1 and the drop ΔH2 between the liquid surface of the third storage tank 16 and the tissue model 18, between the bifurcated flow path 42 communicated with the drain flow path 50 and the bifurcated flow path 42 communicated with the second storage tank 14.

In the abovementioned procedure simulator 10, the second storage tank 14 may be provided at a position separated from the tissue model 18 in a horizontal direction, and the third storage tank 16 may be disposed between the second storage tank 14 and the tissue model 18. Accordingly, it is possible to dispose the third storage tank 16 below the three-way stopcock 48, and simplify the routing of the drain flow path 50.

In the abovementioned procedure simulator 10, the first storage tank 12 may be disposed below the tissue model 18. Accordingly, the tissue model 18 of the procedure simulator 10 is disposed in a compact manner.

In the abovementioned procedure simulator 10, the tissue model 18 and the pipe 22 may be formed of a transparent material. Accordingly, the user can directly visually identify the flow of the colored water, and can easily actually realize that the therapeutic agent can be selectively administered to a specific site.

Moreover, also described herein is a procedure training method that uses the abovementioned procedure simulator 10, and includes: a step of filling a liquid in the first storage tank 12; a step of driving the pump 20 to cause the liquid to circulate among the first storage tank 12, the tissue model 18, and the second storage tank 14; a step of discharging the liquid from the drain flow path 50 via the three-way stopcock 48 (switching valve) of the pipe 22 coupled to an outlet of the predetermined bifurcated flow path 42; a step of inserting the catheter 60 into the tissue model 18 and occluding an upstream portion of the bifurcated flow path 42 that communicates with the drain flow path 50 with the balloon 64; and a step of causing colored water (a contrast medium or a therapeutic agent) to flow from a distal end of the balloon 64.

With the abovementioned procedure training method, it is possible to generate a pressure difference between the bifurcated flow paths 42, and simulate a cancer tissue by the filter member 46. Further, by causing the colored water to flow from the distal end of the balloon 64, it is possible to cause the user to actually realize that the therapeutic agent can be selectively administered to the filter member 46 in which a cancer tissue is imitated.

### (Second Embodiment)

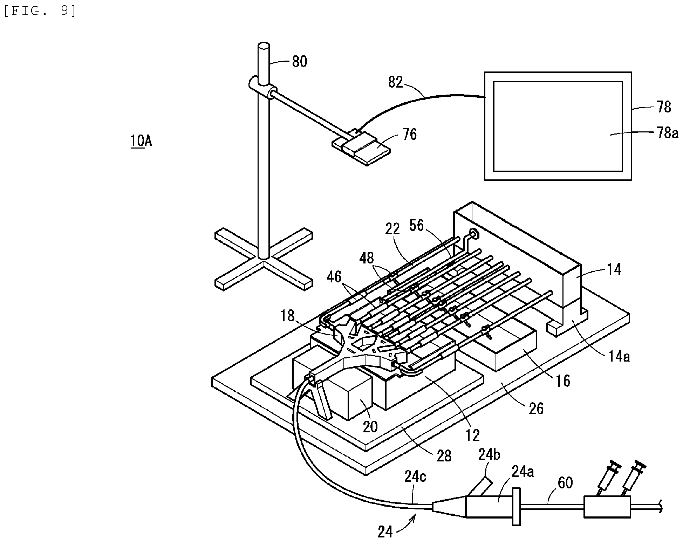

As illustrated in FIG. 9, a procedure simulator 10A according to the present embodiment includes, in addition to the device configuration illustrated in FIG. 2, an imaging device 76 that images the tissue model 18 and the pipe 22, and a display device 78 that displays video imaged by the imaging device 76.

The imaging device 76 includes, for example, a smartphone, a compact camera, or the like, and is disposed above the tissue model 18 and the pipes 22 with a stand 80. A planar illumination device that illuminates the tissue model 18, the pipes 22, and the filter members 46 may be provided under the third storage tank 16. The imaging device 76 images video of the tissue model 18 and the pipe 22 seen from the upper side. The imaging device 76 is coupled to the display device 78, for example, via a communication cable 82 such as a USB cable, and video data imaged by the imaging device 76 is sent to the display device 78.

As for the display device 78 that is a device having a comparative large display screen 78a, for example, a liquid crystal monitor, a screen, a tablet terminal, or the like can be used. The image (video) imaged by the imaging device 76 is displayed in real time on the display screen 78a of the display device 78.

The procedure simulator 10A according to the embodiment can be also used for the training of operating the catheter 60 while watching a planar image that appears on the display screen 78a of the display device 78. With such the training, it is possible to grasp the operation of the catheter 60 and the flow of the colored water under the condition similar to the actual procedure that the user performs while watching an X-ray fluoroscope.

In the above, the present invention has been described with the preferred embodiments, however, the present invention is not limited to the embodiments, and it is needless to say that various modifications are possible without deviating from the scope of the invention. Even in a case where a cancer and tumor tissue generated in an organ other than the liver is used as a target, tissue models in accordance with target organs are combined, whereby the present invention can be implemented.

## Claims

1. A procedure simulator (10) comprising:
a first storage tank (12) that stores therein a liquid;
a tissue model (18) including a plurality of bifurcated flow paths (42) being bifurcated downstream via a plurality of bifurcated portions (34), the bifurcated portions (34) and the bifurcated flow paths (42) being formed at a same height;
a pump (20) that supplies the liquid in the first storage tank (12) to the tissue model (18);
a second storage tank (14) that stores therein the liquid to be flowed out from the bifurcated flow paths (42);
a pipe (22) that connects an outlet of the bifurcated flow path (42) to the second storage tank (14);
a switching valve (48) that is provided on a way of the pipe (22), and selectively causes the bifurcated flow path (42) to communicate with a drain flow path (50) from which the liquid is discharged below the second storage tank (14);
a filter member (46) that is provided on a way of the pipe (22) between the switching valve (48) and the outlet of the bifurcated flow path (42); and
wherein the filter members (46) that are provided to the respective bifurcated flow paths (42) are disposed side by side in a line.

2. The procedure simulator (10) according to claim 1, wherein the pipe (22) is coupled to a vicinity of a lower end of the second storage tank (14), and a liquid surface of the liquid in the second storage tank (14) is maintained at a position higher than the tissue model (18).

3. The procedure simulator (10) according to claim 2, wherein the pipe (22) is coupled to the second storage tank (14) at a same height as the tissue model (18).

4. The procedure simulator (10) according to claim 3, further comprising a reflux pipe (22) that is coupled to the second storage tank (14) at a position higher than the pipe (22), and causes the liquid in the second storage tank (14) to flow back to the first storage tank (12).

5. The procedure simulator (10) according to any one of claims 1 to 4, further comprising a third storage tank (16) that contains the liquid to be discharged from the drain flow path (50), wherein a liquid surface of the third storage tank (16) is present at a position lower than the tissue model (18).

6. The procedure simulator (10) according to claim 5, wherein the second storage tank (14) is provided at a position separated from the tissue model (18) in a horizontal direction, and the third storage tank (16) is disposed between the second storage tank (14) and the tissue model (18).

7. The procedure simulator (10) according to any one of claims 1 to 6, wherein the first storage tank (12) is disposed below the tissue model (18).

8. The procedure simulator (10) according to any one of claims 1 to 7, further comprising: an imaging device that images the tissue model (18) and the pipe (22), and a display device that displays video imaged by the imaging device.

9. The procedure simulator (10) according to claim 8, further comprising an illumination device that illuminates the tissue model (18), the pipe (22), and the filter member (46).

## Patentansprüche

1. Vorgangssimulator (10), umfassend:
einen ersten Speichertank (12), der darin eine Flüssigkeit speichert;
ein Gewebemodell (18), das eine Vielzahl von gegabelten Strömungswegen (42) beinhaltet, die stromabwärts über eine Vielzahl von gegabelten Abschnitten (34) gegabelt sind, wobei die gegabelten Abschnitte (34) und die gegabelten Strömungswege (42) auf einer gleichen Höhe ausgebildet sind;
eine Pumpe (20), die die Flüssigkeit in dem ersten Speichertank (12) dem Gewebemodell (18) zuführt;
einen zweiten Speichertank (14), der darin die Flüssigkeit speichert, die aus den gegabelten Strömungswegen (42) ausströmen soll;
ein Rohr (22), das einen Auslass des gegabelten Strömungswegs (42) mit dem zweiten Speichertank (14) verbindet;
ein Schaltventil (48), das auf einem Weg des Rohrs (22) vorgesehen ist und selektiv bewirkt, dass der gegabelte Strömungsweg (42) mit einem Abflussströmungsweg (50) in Verbindung steht, aus dem die Flüssigkeit unter dem zweiten Speichertank (14) abgegeben wird;
ein Filterelement (46), das auf einem Weg des Rohrs (22) zwischen dem Schaltventil (48) und dem Auslass des gegabelten Strömungswegs (42) vorgesehen ist; und
wobei die Filterelemente (46), die an den jeweiligen gegabelten Strömungswegen (42) vorgesehen sind, Seite an Seite in einer Linie angeordnet sind.

2. Vorgangssimulator (10) nach Anspruch 1, wobei das Rohr (22) in einer Nähe eines unteren Endes des zweiten Speichertanks (14) gekoppelt ist und eine Flüssigkeitsoberfläche der Flüssigkeit in dem zweiten Speichertank (14) an einer Position höher als das Gewebemodell (18) gehalten wird.

3. Vorgangssimulator (10) nach Anspruch 2, wobei das Rohr (22) mit dem zweiten Speichertank (14) auf einer gleichen Höhe wie das Gewebemodell (18) gekoppelt ist.

4. Vorgangssimulator (10) nach Anspruch 3, ferner umfassend ein Rücklaufrohr (22), das mit dem zweiten Speichertank (14) an einer Position gekoppelt ist, die höher als das Rohr (22) ist und bewirkt, dass die Flüssigkeit in dem zweiten Speichertank (14) zurück zu dem ersten Speichertank (12) strömt.

5. Vorgangssimulator (10) nach einem der Ansprüche 1 bis 4, ferner umfassend einen dritten Speichertank (16), der die Flüssigkeit enthält, die aus dem Abflussströmungsweg (50) abgegeben werden soll, wobei sich eine Flüssigkeitsoberfläche des dritten Speichertanks (16) an einer Position befindet, die niedriger als das Gewebemodell (18) ist.

6. Vorgangssimulator (10) nach Anspruch 5, wobei der zweite Speichertank (14) an einer Position vorgesehen ist, die von dem Gewebemodell (18) in einer horizontalen Richtung getrennt ist, und der dritte Speichertank (16) zwischen dem zweiten Speichertank (14) und dem Gewebemodell (18) angeordnet ist.

7. Vorgangssimulator (10) nach einem der Ansprüche 1 bis 6, wobei der erste Speichertank (12) unter dem Gewebemodell (18) angeordnet ist.

8. Vorgangssimulator (10) nach einem der Ansprüche 1 bis 7, ferner umfassend: eine Bildgebungsvorrichtung, die das Gewebemodell (18) und das Rohr (22) abbildet; und eine Anzeigevorrichtung, die ein von der Bildgebungsvorrichtung abgebildetes Video anzeigt.

9. Vorgangssimulator (10) nach Anspruch 8, ferner umfassend eine Beleuchtungsvorrichtung, die das Gewebemodell (18), das Rohr (22) und das Filterelement (46) beleuchtet.

## Revendications

1. Simulateur de procédure (10) comprenant :
un premier réservoir de stockage (12) qui stocke un liquide dans celui-ci ;
un modèle de tissu (18) comprenant une pluralité de trajets d'écoulement bifurqués (42) bifurqués en aval via une pluralité de parties bifurquées (34), les parties bifurquées (34) et les trajets d'écoulement bifurqués (42) étant formés à une même hauteur ;
une pompe (20) qui fournit le liquide dans le premier réservoir de stockage (12) au modèle de tissu (18) ;
un second réservoir de stockage (14) qui stocke le liquide devant s'écouler hors des trajets d'écoulement bifurqués (42) ;
un tuyau (22) qui relie une sortie du trajet d'écoulement bifurqué (42) au second réservoir de stockage (14) ;
une soupape de commutation (48) qui est fournie sur une voie du tuyau (22), et amène sélectivement le trajet d'écoulement bifurqué (42) à communiquer avec un trajet d'écoulement de drainage (50) à partir duquel le liquide est déchargé en dessous du second réservoir de stockage (14) ;
un élément de filtre (46) qui est fourni sur une voie du tuyau (22) entre la soupape de commutation (48) et la sortie du trajet d'écoulement bifurqué (42) ; et où les éléments de filtre (46) qui sont fournis aux trajets d'écoulement bifurqués respectifs (42) sont disposés côte à côte en ligne.

2. Simulateur de procédure (10) selon la revendication 1, où le tuyau (22) est couplé à proximité d'une extrémité inférieure du second réservoir de stockage (14), et une surface de liquide du liquide dans le second réservoir de stockage (14) est maintenue à une position plus haute que le modèle de tissu (18).

3. Simulateur de procédure (10) selon la revendication 2, où le tuyau (22) est couplé au second réservoir de stockage (14) à une même hauteur que le modèle de tissu (18).

4. Simulateur de procédure (10) selon la revendication 3, comprenant en outre un tuyau de reflux (22) qui est couplé au second réservoir de stockage (14) à une position plus haute que le tuyau (22), et amène le liquide dans le second réservoir de stockage (14) à s'écouler en retour vers le premier réservoir de stockage (12).

5. Simulateur de procédure (10) selon l'une quelconque des revendications 1 à 4, comprenant en outre un troisième réservoir de stockage (16) qui contient le liquide à décharger à partir du trajet d'écoulement de drainage (50), où une surface de liquide du troisième réservoir de stockage (16) est présente à une position plus basse que le modèle de tissu (18).

6. Simulateur de procédure (10) selon la revendication 5, où le second réservoir de stockage (14) est fourni à une position séparée du modèle de tissu (18) dans une direction horizontale, et le troisième réservoir de stockage (16) est disposé entre le second réservoir de stockage (14) et le modèle de tissu (18).

7. Simulateur de procédure (10) selon l'une quelconque des revendications 1 à 6, où le premier réservoir de stockage (12) est disposé sous le modèle de tissu (18).

8. Simulateur de procédure (10) selon l'une quelconque des revendications 1 à 7, comprenant en outre : un dispositif d'imagerie qui image le modèle de tissu (18) et le tuyau (22) ; et un dispositif d'affichage qui affiche une vidéo imagée par le dispositif d'imagerie.

9. Simulateur de procédure (10) selon la revendication 8, comprenant en outre un dispositif d'éclairage qui éclaire le modèle de tissu (18), le tuyau (22) et l'élément de filtre (46).
